# EUROPEAN PATENT SPECIFICATION

(11) **EP 0 810 438 B1**
(45) Date of publication and mention of the grant of the patent: **04.02.2004**
(21) Application number: 97108726.7
(22) Date of filing: 30.05.1997
(51) Int. Cl.: G01N 35/10, B01L 3/02

(54) **Microvolume liquid handling system**
Vorrichtung zur Handhabung von Mikroflüssigkeitsmengen
Système de manipulation de microvolumes de liquides

(30) Priority: 31.05.1996 US 656455; 08.04.1997 US 41861 P
(43) Date of publication of application: 03.12.1997
(73) Proprietor: Packard Instrument Company, Inc., Downers Grove, IL 60515 (US)
(72) Inventor: Pelc, Richard E., Libertyville, IL 60048 (US); Chibucos, Nicholas S., Bloomingdale, IL 60108 (US); Papen, Roeland F., Wheaton, IL 60187 (US); Meyer, Wilhelm J., 21255 Tostedt (DE)
(74) Representative: Grünecker, Kinkeldey, Stockmair & Schwanhäusser Anwaltssozietät

(56) References cited:
- EP-A- 0 169 071
- EP-A- 0 268 237
- EP-A- 0 438 136
- EP-A- 0 508 531
- EP-A- 0 545 284
- US-A- 4 777 832
- PATENT ABSTRACTS OF JAPAN vol. 013, no. 560 (M-906), 13 December 1989 (1989-12-13) & JP 01 234144 A (NAGAO SAITO;OTHERS: 01), 19 September 1989 (1989-09-19)

## Description

The present invention relates to an apparatus and process for controlling, dispensing and measuring small quantities of fluid. More specifically, the present invention senses pressure changes to ascertain and confirm fluid volume dispensed and proper system functioning.

EP-A-508 531 describes a liquid dispensing device using container bottom sensing.
The liquid dispensing device includes a pump for metering the volume dispensed by replacement action caused by the stroke of a pump. A pressure transducer is provided for sensing pressure within the dispensing system which is used to sense when the dispensing port of the dispenser reaches a predetermined position above a bottom of a receiving container. The transducer is used to control movement of the pump and upward and downward movement of the dispensing opening.

EP-A-438 136 describes an automatic dispensing and diluting system using a reagent liquid moved by a sample pump within the system for determining the amount of dispensed liquid. A further pump is provided for pumping gas used for detecting of a surface of a liquid. This system includes a pressure sensor arranged and used for sensing the pressure of the gas for the liquid surface detection.

EP 268 237 describes an apparatus and a process for dispensing a liquid including a microdispenser which is pulsed by electric pulses for ejecting droplets of the liquid to be dispensed. The system is open to the atmosphere so that any pressure drop within the system caused by ejecting of liquid droplets cannot be detected in the system.

Advances in industries employing chemical and biological processes have created a need for the ability to accurately and automatically dispense small quantities of fluids containing chemically or biologically active substances for commercial or experimental use. Accuracy and precision in the amount of fluid dispensed is important both from the standpoint of causing a desired reaction and minimizing the amount of materials used.

Equipment for dispensing microvolumes of liquid have been demonstrated with technologies such as those developed for inkjet applications. However, ink jet equipment has the advantage of operating with a particular ink (or set of inks) of known and essentially fixed viscosity and other physical properties. Thus, because the properties of the ink being used are known and fixed, automatic ink jet equipment can be designed for the particular ink specified. Direct use of ink jet technology with fluids containing a particular chemical and biological substance of interest ("transfer liquid") is more problematic. Such transfer liquids have varying viscosity and other physical properties that make accurate microvolume dispensing difficult. Automatic microvolume liquid handling systems should be capable of handling fluids of varying viscosity and other properties to accommodate the wide range of substances they must dispense. Another aspect of this problem is the need to accommodate accurately dispensing smaller and smaller amounts of transfer liquid. Especially in the utilization and test of biological materials, it is desirable to reduce the amount of transfer liquid dispensed in order to save costs or more efficiently use a small amount of material available. It is often both desirable and difficult to accurately dispense microvolumes of transfer liquid containing biological materials. Knowing the amount of transfer liquid dispensed in every ejection of transfer liquid would be advantageous to an automated system.

Another difficulty with dispensing microvolumes of transfer liquid arises due to the small orifices, e.g., 20-80 micrometers in diameter, employed to expel a transfer liquid. These small orifice sizes are susceptible to clogging. Heavy use of the nozzle promotes undesirable clogging by materials in the fluid being dispensed. Further exacerbating the clogging problem are the properties of the substances sometimes used in the transfer liquid. Clogging of transfer liquid substances at the orifice they are expelled from, or in other parts of the dispenser, can halt dispensing operations or make them far less precise. Therefore, it would be desirable to prevent or minimize clogging, be able to detect when such conditions are occurring, and to be able to automatically recover from these conditions. Failure of a microvolume dispenser to properly dispense transfer liquid can also be caused by other factors, such as air or other compressible gases being in the dispensing unit. It would be desirable to detect and indicate when a microvolume dispenser is either not dispensing at all, or not dispensing the desired microvolume ("misfiring").

Over time it may be necessary to aspirate a variety of different fluid mixtures or solutions into the microvolume dispenser in order to dispense those fluids. Because each fluid may contaminate the microvolume dispenser with regard to a later-used fluid it is desirable to thoroughly clean a microdispenser when fluids are changed. Even when fluids are not changed, cleaning is necessary to prevent buildup of materials inside the microvolume dispenser. Unfortunately, using a pump alone to flush out the microvolume dispenser is not always 100% effective. Therefore, it would be desirable to be able to easily and thoroughly clean the microvolume dispenser from time to time.

In order to achieve an automated microvolume dispensing system it would be desirable to ensure in realtime that the transfer liquid is within some given range of relevant system parameters in order to rapidly and accurately dispense transfer liquid droplets of substantially uniform size. For example, it is desirable to ensure that the transfer liquid is accurately deposited at its target surface. Because industry requires rapid dispensing of microvolume amounts of transfer liquid, it is also desirable to be able to ascertain transfer liquid volume dispensed, and to be able to detect and recover from dispensing problems in realtime.

It is a primary object of the present invention to provide a microvolume iiquid handling system which is capable of accurately verifying microvolume amounts of transfer liquid dispensed by sensing a corresponding change in pressure in the microvolume liquid handling system.

It is also an object of the present invention to provide a microvolume liquid handling system which can accurately measure an amount of dispensed liquid regardless of transfer liquid properties such as viscosity.

It is another object of the present invention to provide a microvolume liquid handling system which can transfer microvolume quantities of fluids containing chemically or biologically active substances.

It is a further object of the present invention to provide a microvolume liquid handling system that prevents or minimizes clogging.

It is still another object of the present invention to provide a microvolume liquid handling system which senses pressure changes associated with clogging and misfiring to indicate such improper operation.

It is yet another object of the present invention to provide a microvolume liquid handling system which can verify that the transfer liquid is maintained within a given range of negative pressure (with respect to ambient atmospheric pressure) in order to accurately dispense microvolume amounts of transfer liquid and optimize the operation of the microdispenser.

To meet the above objects the present invention provides a microvolume liquid handling system according to claim 1, and the method according to claim 15.

Other objects and advantages of the present invention will be apparent from the following detailed description.

Accordingly, the foregoing objectives are realized in a first preferred embodiment by providing a microvolume liquid handling system which includes a positive displacement pump operated by a stepper motor, a piezoresistive pressure sensor, and an electrically controlled microdispenser that utilizes a piezoelectric transducer bonded to a glass capillary. The microdispenser is capable of rapidly and accurately dispensing sub-nanoliter ("nl") sized droplets by forcibly ejecting the droplets from a small nozzle, this is known as 'drop-on-demand'. The first embodiment is more preferred when four or fewer microdispensers are each coupled to a single positive displacement pump and pressure sensor.

A second preferred embodiment of the microvolume liquid handling system, which is more preferred when the number of microdispensers employed is equal to or greater than eight, also realizes the foregoing objectives. The second preferred embodiment is similar to the first preferred embodiment, except that the positive displacement pump (which includes a valve as described below), the stepper motor, and the piezoresistive pressure sensor are replaced with a pressure control system for supplying system fluid and controlling system fluid pressure, a plurality of flow sensors for detecting fluid flow as well as pressure in the system fluid present in connecting tubing coupled to each microdispenser, and plurality of microfabricated valves, each microfabricated valve coupling each microdispenser to a system reservoir in the pressure control system.

To provide the functionality of an automated liquid handling system, the microdispensers in both first and second preferred embodiments are mounted onto a 3-axis robotic system that is used to position the microdispensers at specific locations required to execute the desired liquid transfer protocol.

The present invention includes a system liquid and a transfer liquid in the dispensing system separated by a known volume of air ("air gap") which facilitates measuring small changes in pressure in the system liquid that correlate to the volume of transfer liquid dispensed. The transfer liquid contains the substances being dispensed, while in one preferred embodiment the system liquid is deionized water. Each time a droplet in the microvolume dispensing range is dispensed, the transfer liquid will return to its prior position inside the microdispenser because of capillary forces, and the air gap's specific volume will be increased corresponding to the amount of transfer liquid dispensed. This has the effect of decreasing pressure in the system liquid line which is measured with a highly sensitive piezoresistive pressure sensor. The pressure sensor transmits an electric signal to control circuitry which converts the electric signal into a digital form and generates an indication of the corresponding volume of transfer liquid dispensed. An advantage of the present invention is its insensitivity to the viscosity of the transfer liquid. This is because the pressure change in the system liquid corresponds to the microvolume dispensed, without being dependent on the dispensed fluid viscosity. The present invention possesses unique capabilities in microvolume liquid handling. This system is capable of automatically sensing liquid surfaces, aspirating liquid to be transferred, and then dispensing small quantities of liquid with high accuracy, speed and precision. The dispensing is accomplished without the dispenser contacting the destination vessel or contents. A feature of the present invention is the capability to positively verify the microvolume of liquid that has been dispensed during realtime operation.

Another aspect of the present invention prevents or minimizes clogging by activating the piezoelectric transducer at ultrasonic frequencies resonant with the microdispenser. By vibrating the microdispenser at its resonant ultrasonic frequency during aspiration of transfer liquid into the glass capillary, clogging is prevented or minimized. The piezoelectric transducer is also activated at the same resonant ultrasonic frequencies when the capillary is being cleaned. The resonant vibrations of the capillary during cleaning result in a cleaner glass capillary interior than previously achieved. Because the same structure is used to prevent clogging, break up existing clogs and clean the microdispenser, greater efficiencies are achieved than previously possible.

Still another aspect of the present invention enables the microdispensers to be positioned with a high degree of accuracy with regard to wells of a microtitre plate. Visible or infrared light is transmitted through a transparent bottom half of a microtitre plate containing wells organized in rows and columns. Light does not pass through the opaque top half of the microtitre plate. When a particular microdispenser is moved from a position above the opaque top half of the microtitre plate to a position above the transparent bottom half of the microtitre plate, light passes through the glass capillary in the microdispenser where it is detected by a photodetector in optical contact with the glass capillary. The photodetector generates electronic signals corresponding to the amount of light received. The signals from the photodetector are coupled to a computer which uses the signals to help locate and verify the position of the microdispenser.
FIG. 1 is a block diagram of the a microvolume liquid handling system illustrating the first embodiment of the present invention;
FIG. 2 is a schematic of a positive displacement pump illustrating an aspect of the first embodiment of the present invention;
FIG. 3 is side plan view of a microdispenser including a piezoelectric transducer;
FIG. 4 is a graph depicting the system line pressure during a microdispenser dispense illustrating operation of the present invention;
FIG. 5 is an exploded perspective view of two halves of a microtitre plate prior to being joined, as used with the present invention;
FIG. 6 is a sectional side plan view showing the two halves of the microtitre plate after having been joined in accordance with the present invention; and
FIG. 7 is a block diagram of the a microvolume liquid handling system illustrating the second embodiment of the present invention;

While the invention is susceptible to various modifications and alternative forms, specific embodiments thereof have been shown by way of example in the drawings and will herein be described in detail. It should be understood, however, that it is not intended to limit the invention to the particular forms disclosed. On the contrary, the intention is to cover all modifications, equivalents, and alternatives falling within the scope of the invention as defined by the appended claims.

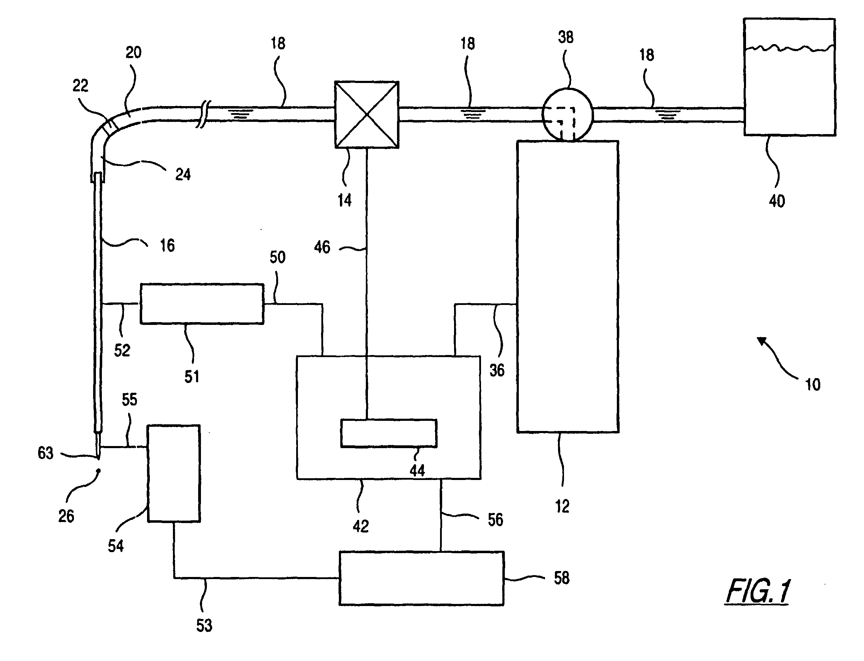

Turning now to the drawings and referring first to FIG. 1, a first embodiment of microvolume liquid handling system 10 is illustrated. The microvolume liquid handling system 10 includes a positive displacement pump 12, a pressure sensor 14 and a microdispenser 16. Tubing 18 connects the positive displacementpump 12 to the pressure sensor 14 and the pressure sensor 14 to the microdispenser 16. The positive displacement pump 12 moves a system liquid 20 through the pressure sensor 14 and the microdispenser 16. After the system 10 is loaded with system liquid 20, an air gap 22 of known volume, then an amount of transfer liquid 24, are drawn into the microdispenser 16 in a manner described below. The transfer liquid 24 contains one or more biologically or chemically active substances of interest. In one preferred embodiment the microdispenser 16 expels (or synonymously, "shoots") sub-nanolitersize individual droplets 26 which are very reproducible. The expelled droplets 26 of transfer liquid 24 are on the order of 0.45 nanoliters per droplet 26 in one preferred embodiment, but they can be as small as 5 picoliters. For example, if one desires to expel a total of 9 nanoliters of transfer liquid 24, then the microdispenser 16 will be directed to expel 20 droplets 26. Droplet 26 size can be varied by varying the magnitude and duration of the electrical signal applied to the microdispenser 16. Other factors affecting droplet size include: the size of the nozzle opening at the bottom of the microdispenser, the pressure at the microdispenserinlet, and properties of the transfer liquid.

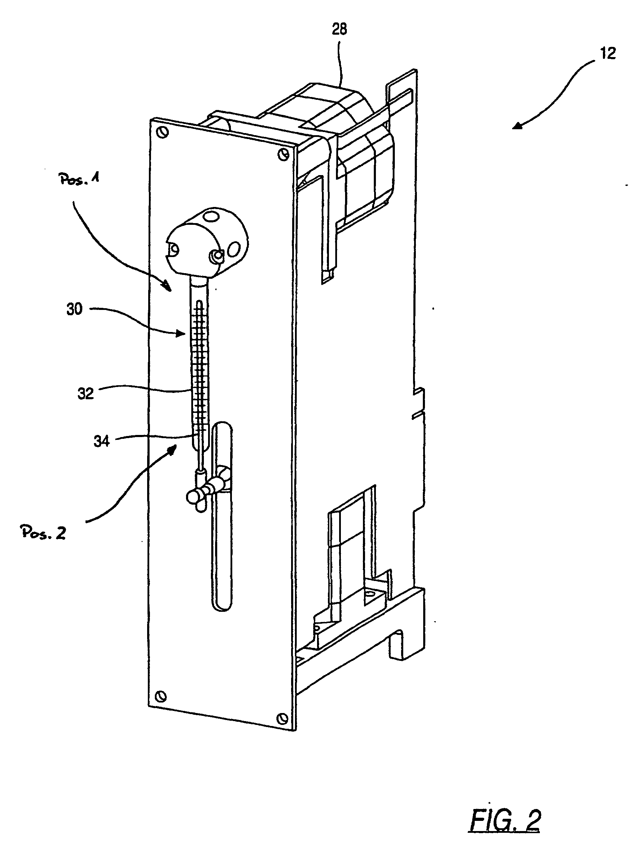

Referring now to FIGS. 1 and 2, in one preferred embodiment the positive displacement pump 12 is a XL 3000 Modular Digital Pump manufactured by Cavro Scientific Instruments, Inc., 242 Humboldt Court, Sunnyvale, California 94089. The positive displacement pump 12 includes stepper motor 28, and a syringe 30. The syringe 30 includes a borosilicate glass tube 32 and a plunger 34 which is mechanically coupled through a series of gears and a belt (not shown) to the stepper motor 28. Stepper motor 28 motion causes the plunger 34 to move up or down by a specified number of discrete steps inside the glass tube 32. The plunger 34 forms a fluidtight seal with the glass tube 32. In one preferred embodiment syringe 30 has a usable capacity of 250 microliters which is the amount of system liquid 20 the plunger 34 can displace in one full stroke. Depending on the selected mode of operation, the stepper motor 28 is capable of making 3,000 or 12,000 discrete steps per plunger 34 full stroke. In one preferred embodiment the stepper motor 28 is directed to make 12,000 steps per full plunger 34 stroke with each step displacing approximately 20.83 nanoliters of system liquid 20. In one preferred embodiment the system liquid 20 utilized is deionized water.

Digitally encoded commands cause the stepper motor 28 within the positive displacement pump 12 to aspirate discrete volumes of liquid into the microdispenser 16, wash the microdispenser 16 between liquid transfers, and to control the pressure in the system liquid 20 line for microvolume liquid handling system 10 operation. The positive displacement pump 12 is also used to prime the system 10 with system liquid 20 and to dispense higher volumes of liquid through the microdispenser 16, allowing dilute solutions to be made. The positive displacement pump 12 can also work directly with transfer liquid 24. Thus, if desired, transfer liquid 24 can be used as system liquid 20 throughout the microvolume liquid handling system 10.

To prime the microvolume liquid handling system 10, the control logic 42 first directs a 3-axis robotic system 58 through electrical wire 56 to position the microdispenser 16 over a wash station contained on the robotic system 58. In one preferred embodiment the microvolume liquid handling system 10 includes, and is mounted on, a 3-axis robotic system is a MultiPROBE CR10100, manufactured by Packard Instrument Company, Downers Grove, Illinois. The positive displacement pump 12 includes a valve 38 for connecting a system liquid reservoir 40 to the syringe 30. An initialization control signal is transmitted through the electrical cable 36 to the pump 12 by control logic 42 which causes the valve 38 to rotate connecting the syringe 30 with the system fluid reservoir 40. The control signal also causes the stepper motor 28 to move the plunger 34 to its maximum extent up (Position 1 in FIG. 2) into the borosilicate glass tube 32. The next command from the control logic 42 causes the stepper motor 28 to move the plunger 34 to its maximum extent down (Position 2 in FIG. 2) inside the tube 32, to extract system liquid 20 from the system reservoir 40. Another command from the control logic 42 directs the valve 38 to rotate again, causing the syringe 30 to be connected with the tubing 18 connected to the pressure sensor 14. In one preferred embodiment the tubing 18 employed in the microvolume liquid handling system 10 is Natural Color Teflon Tubing made by Zeus Industrial Products, Inc., Raritan, New Jersey, with an inner diameter of 1.5 mm (0.059 inches) and an outer diameter of 2.5 mm (0.098 inches). The next command from the control logic 42 to the positive displacement pump 12 causes the system liquid 20 inside of the syringe 30 to be pushed into the microvolume liquid handling system 10 towards the pressure sensor 14. Because the microvolume liquid handling system 10 typically requires about 4 milliliters of system fluid to be primed, the sequence of steps described above must be repeated about 16 times in order to completely prime the microvolume liquid handling system 10.

The control logic 42 receives signals from the pressure sensor 14 through an electrical line 46. The signals are converted from an analog form into a digital form by an A/D (analog to digital) converter 44 and used by the control logic 42 for processing and analysis. In one preferred embodiment the A/D conversion is a PC-LPM-16 Multifunction I/O Board manufactured by National Instruments Corporation, Austin, Texas. At various points in the liquid transfer process described herein, the control logic 42 receives signals from the pressure transducer 14, and sends command signals to the pump 12, microdispenser electronics 51, and the 3-axis robotic system 58. Within the control logic 42 are the encoded algorithms that sequence the hardware (robotic system 58, pump 12, and microdispenser electronics 51) for specified liquid transfer protocols as described herein. Also within the control logic 42 are the encoded algorithms that process the measured pressure signals to: verify and quantify microdispenses, perform diagnostics on the state of the microvolume liquid handling system, and automatically perform a calibration of the microdispenser for any selected transfer liquid 24.

The pressure sensor 14 senses fluctuations in pressure associated with priming the microvolume liquid handling system 10, aspirating transfer liquid 24 with pump 12, dispensing droplets 26 with microdispenser 16, and washing of microdispenser 16 using pump 12. In one preferred embodiment the pressure sensor 14 is a piezoresistive pressure sensor part number 26PCDFG6G, from Microswitch, Inc., a Division of Honeywell, Inc., 11 West Spring Street, Freeport, Illinois 61032. Also included with the pressure sensor 14 in the block diagram in Figure 1 is electrical circuitry to amplify the analog pressure signal from the pressure sensor. The pressure sensor 14 converts pressure into electrical signals which are driven to the A/D converter 44 and then used by the control logic 42. For example, when the microvolume liquid handling system 10 is being primed, the pressure sensor 14 will send electrical signals which will be analyzed by the control logic 42 to determine whether they indicate any problems within the system such as partial or complete blockage in the microdispenser 16.

Once the microvolume liquid handling system 10 is primed, the control logic 42 sends a signal through electrical wire 56 which instructs the robotic system 58 to position the microdispenser 16 in air over the transfer liquid 24. The control logic 42 instructs stepper motor 28 to move the plunger 34 down, aspirating a discrete quantity of air (air gap), e.g., 50 microliters in volume into the microdispenser 16. The control logic 42 then instructs the robotic system 58 to move the microdispenser 16 down until it makes contact with the surface of the transfer liquid 24 (not shown) is made. Contact of the microdispenser 16 with the surface of the transfer liquid 24 is determined by a capacitive liquid level sense system (U.S Patent Number 5,365,783). The microdispenser is connected by electrical wire 55 to the liquid level sense electronics 54. When the liquid level sense electronics 54 detects microdispenser 16 contact with transfer liquid 24 surface, a signal is sent to the robotic system 58 through electrical wire 53 to stop downward motion.

The control logic 42 next instructs the pump 12 to move the plunger 34 down in order to aspirate transfer liquid 24 into the microdispenser 16. The pressure signal is monitored by control logic 42 during the aspiration to ensure that the transfer liquid 24 is being successfully drawn into the microdispenser 16. If a problem is detected, such as an abnormal drop in pressure due to partial or total blockage of the microdispenser, the control logic 42 will send a stop movement command to the pump 12. The control logic 42 will then proceed with an encoded recovery algorithm. Note that transfer liquid 24 can be drawn into the microvolume liquid handling system 10 up to the pressure sensor 14 without threat of contaminating the pressure sensor 14. Additional tubing can be added to increase transfer liquid 24 capacity. Once the transfer liquid 24 has been aspirated into the microdispenser 16, the control logic 42 instructs the robotic system 58 to reposition the microdispenser 16 above the chosen target, e.g., a microtitre plate.

In one preferred embodimentthe microdispenser 16 is the MD-K-130 MicrodispenserHead manufactured by Microdrop, GmbH, Muhlenweg 143, D-22844 Norderstedt, Germany.

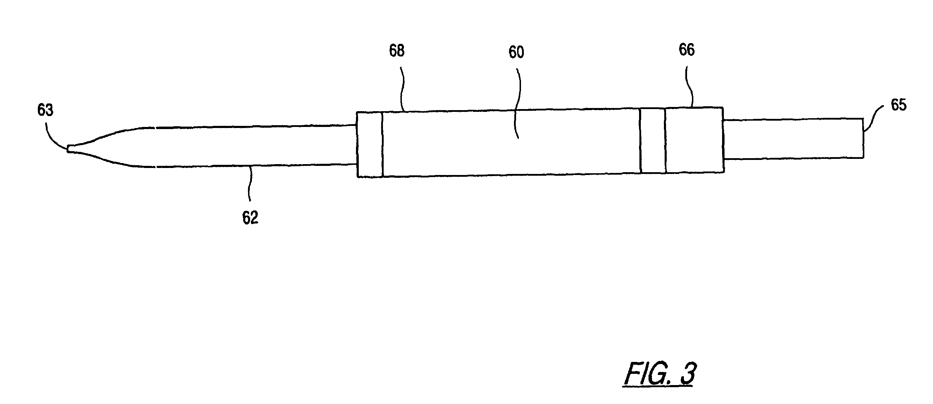

As illustrated in FIG. 3, the microdispenser 16 consists of a piezoceramic tube 60 bonded to a glass capillary 62. The piezoceramictube has an inner electrode 66 and an outer electrode 68 for receiving analog voltage pulses which cause the piezoceramic tube to constrict. Once the glass capillary 62 has been filled with transfer liquid 24, the control logic 42 directs the microdispenserelectronics 51 by electrical wire 50 to send analog voltage pulses to the piezoelectric transducer 60 by electrical wire 52. In one preferred embodiment the microdispenserelectronics 51 is the MD-E-201 Drive Electronics manufacturedby Microdrop, GmbH, Muhlenweg 143, D-22844 Norderstedt, Germany. The microdispenserelectronics 51 control the magnitude and duration of the analog voltage pulses, and also the frequency at which the pulses are sent to the microdispenser 16. Each voltage pulse causes a constrictionof the piezoelectrictransducer60, which in turn deforms the glass capillary 62. The deformation of the glass capillary 62 produces a pressure wave that propagates through the transfer liquid 24 to the microdispenser nozzle 63 where one droplet 26 of transfer liquid 24 is emitted under very high acceleration. The size of these droplets 26 has been shown to be very reproducible. The high acceleration of the transfer liquid 24 minimizes or eliminates problems caused by transfer liquid 24 surface tension and viscosity, allowing extremely small droplets 26 to be expelled from the nozzle, e.g., as small as 5 picoliter droplets 26 have been demonstrated. Use of the microdispenser 16 to propel droplets 26 out of the nozzle also avoids problems encountered in a liquid transfer technique called touchoff. In the touchoff technique, a droplet 26 is held at the end of the nozzle and is deposited onto a target surface by bringing that droplet 26 into contact with the target surface while it is still hanging off of the microdispenser 16. Such a contact process is made difficult by the surface tension, viscosity and wetting properties of the microdispenser 16 and the target surface which lead to unacceptable volume deviations. The present invention avoids the problems of the contact process because the droplets 26 are expelled out of the microdispenser 16 at a velocity of several meters per second. The total desired volume is dispensed by the present invention by specifying the number of droplets 26 to be expelled. Because thousands of droplets 26 can be emitted per second from the microdispenser 16, the desired microvolume of transfer liquid 24 can rapidly be dispensed.

In one preferred embodiment, the lower section of the glass capillary 62, between the piezoelectric transducer 60 and the nozzle 63, is plated with a conductive material, either platinum or gold. This provides an electrically conductive path between the microdispenser 16 and the liquid level sense electronics 54. In one preferred embodiment the glass capillary 62 has an overall length of 73 millimeters, and the nozzle 63 has an internal diameter of 75 micrometers.

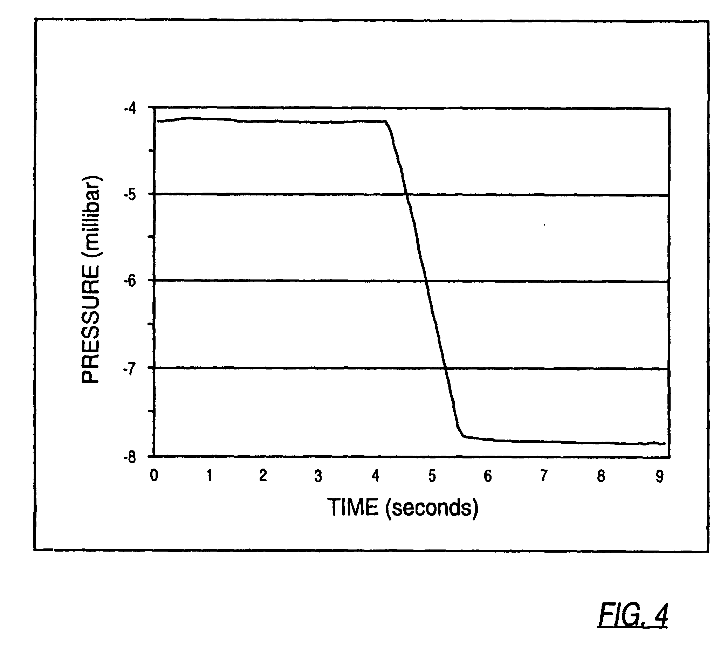

To dispense microvolume quantities of transfer liquid 24, analog voltage pulses are sent to the microdispenser 16, emitting droplets 26 of liquid. Capillary forces acting on the transfer liquid 24 replace the volume of transfer liquid 24 emitted from the microdispenser 16 with liquid from the tubing 18. However, since the transfer liquid-air gap-system liquid column terminates at a closed end in the positive displacement pump 12, there is a corresponding drop in the system liquid 20 line pressure as the air gap 22 is expanded. This is illustrated in Figure 4 which depicts the pressure profile measured during a microdispense of 500 nanoliters. Important to the present invention, the magnitude of the pressure drop is a function of the size of the air gap 22 and the volume of the liquid dispensed.

With an air gap 22 of known volume, the pressure change as detected by the pressure sensor 14 relates to the volume dispensed. Thus, the control logic 42 determines from the pressure change measured by the pressure sensor 14, the volume of transfer liquid 24 that was dispensed. In one preferred embodiment of the present invention it is preferable that the drop in pressure not exceed approximately 30 to 40 millibars below ambient pressure, depending on the properties of the transfer liquid 24. If the amount of transfer liquid 24 dispensed is sufficient to drop the pressure more than 30 to 40 millibars, the pressure difference across the microdispenser 16, i.e., between the ambient pressure acting on the nozzle 63 and the pressure at the capillary inlet 63, will be sufficient to force the transfer liquid 24 up into the tubing 18. This will preclude further dispensing. There is a maximum amount of transfer liquid 24 that can be dispensed before the control logic 42 is required to command the pump 12 to advance the plunger 34 to compensate for the pressure drop. This maximum volume is determined by the desired dispense volume and the size of the air gap 22. Conversely, the size of the air gap 22 can be selected based on the desired dispense volume so as not to produce a pressure drop exceeding 30 to 40 millibars below ambient pressure. It is also within the scope of the present invention to advance the plunger 34 while the microdispenser 16 is dispensing, thereby rebuilding system liquid 20 line pressure, so that the microdispenser 16 can operate continuously.

The change in system liquid 20 pressure is used to determine that the desired amount of transfer liquid 24 was dispensed. A second verification of the amount of transfer liquid 24 that was dispensed is made by the control logic 42 monitoring the system liquid 20 line pressure while directing the pump 12 to advance the syringe plunger 34 upwards towards Position 1. The syringe plunger 34 is advanced until the system liquid 20 line pressure returns to the initial (pre-dispense) value. By the control logic 42 tracking the displaced volume the plunger 34 moves (20.83 nanoliters per stepper motor 28 step), a second confirmation of dispensed volume is made, adding robustness to the system. The system liquid 20 line pressure is now at the correct value for the next microdispenser 16 dispense, if a multi-dispensesequence has been specified.

Once the transfer liquid 24 dispensing has been completed, the control logic 24 causes the robotic system 58 to position the microdispenser 16 over the wash station. The control logic 24 then directs pump 12 and robotic system 58 in a wash sequence that disposes of any transfer liquid 24 left in the microdispenser 16, and washes the internal surface of glass capillary 62 and the external surface in the nozzle 63 area that was exposed to transfer liquid 24. The wash fluid can either be system liquid 20 or any other liquid placed onto the deck of the robotic system 58. The wash sequence is designed to minimize cross-contaminationof subsequent transfer liquids 24 with transfer liquids processed prior. Toward this end, it is also possible to enable an ultrasonic wash of the microdispenser 16. This is accomplished by the control logic 42 directing the microdispenserelectronics 51 to send electrical pulses to the microdispenserat a frequency in the ultrasonic range, e.g., 12 - 15 kilohertz (the preferred resonant frequency is believed to be approximately 12 kilohertz), that coincideswith a resonant frequency of the microdispenser 16 - transfer liquid 24 system. Activating the piezoelectric transducer 60 at ultrasonic frequencies resonant with the glass capillary 62 of the microdispenser 16 causes the interior surfaces of the glass capillary 62 to vibrate vigorously. In both the first and second embodiments, system liquid 20 or a special cleaning and/or neutralizing fluid is used to flush out the microdispenser 16 while the piezoelectric transducer 60 is activated at resonant frequencies. Cleaning with resonant ultrasonic excitation has the effect of far more efficiently dislodging and eliminating matter adhering to the microdispenser 16. For example, it has been shown in a number of test cases that ultrasonic excitation caused a 200% to 500% improvement (depending on the contaminant) in the reduction of residual matter left in the microdispenser 16 as compared to cleaning without ultrasonic excitation.

Resonant ultrasonic excitation of the microdispenser 16 also is used to prevent, minimize or alleviate clogging of the nozzle of the microdispenser. For example, when transfer liquid is being aspirated into the microdispenser 16 it must pass through the relatively narrow nozzle 63 in the glass capillary 62. Matter in the transfer liquid 24 often comes into contact with the nozzle's 63 surfaces permitting the matter to adhere to the nozzle 63, depending on the nature of the contact. In biochemical applications, one widely used matter added to the transfer liquid 24 is polystyrene spheres. These spheres typically range from 1 µM to over 30 µM and may be uncoated or coated with magnetic ferrites, antigens or other materials. The relatively large size of the polystyrene spheres with regard to nozzle 63 diameter, in combination with their sometimes sticky coatings, can cause the spheres to adhere to the nozzle 63. It has been discovered that if the piezoelectric transducer 60 is excited at the ultrasonic resonant frequency of the microdispenser 16 while the microdispenser 16 is being loaded (i.e. transfer liquid 24 is being aspirated in to the microdispenser 16) that clogging is prevented or less likely to occur. Thus, ultrasonic excitation of the microdispenser 16 works to prevent or diminish clogging of the nozzle 63 by materials in the transfer liquid 24.

Anytime a transfer liquid 24 containing dissolved or suspended materials passes through the nozzle 63 there is a possibility of clogging. Accordingly, not only is clogging a problem during aspiration of transfer liquid 24 into the microdispenser 16 as described above, but it is also a problem when transfer liquid is dispensed from the microdispenser 16. It has been discovered that periodic resonant ultrasonic excitation of the microdispenser 16 between droplet dispensing by the piezoelectric transducer can reduce buildup of materials adhering to the nozzle 63 and thus prevent clogging in some instances. Even if substantial clogging does occur, resonant ultrasonic excitation of the microdispenser 16 by the piezoelectric transducer 60 will substantially clear the clogging materials from the nozzle 63. The key advantage here is that by preventing or eliminating clogging of the nozzle 63, the microvolume liquid handling system 10 can continue operation without resort to extraordinary cleaning procedures and the delays associated with those procedures. In short, system downtime is reduced, thereby making the microvolume liquid handling system 10 more efficient.

In the above description of the invention, the control of the microdispenser 16 was effected by sending a specific number of electrical pulses from the microdispenser electronics 51, each producing an emitted droplet 26 of transfer liquid 24. It is also within the scope of the invention to control the microdispenser 16 by monitoring the pressure sensor 14 signal in realtime, and continuing to send electrical pulses to the microdispenser 16 until a desired change in pressure is reached. In this mode of operation, the PC-LPM-16 Multifunction I/O Board that contains the A/D converter 44 is instructed by control logic 42 to send electrical pulses to the microdispenserelectronics 51. Each pulse sent by the Multifunetion I/O Board results in one electrical pulse that is sent by the microdispenser electronics 51 to the microdispenser 16, emitting one droplet 26 of transfer liquid 24. The control logic 42 monitors the pressure sensor 14 signal as the microdispenser 16 dispense is in progress, and once the desired change in pressure has been attained, the control logic 42 directs the Multifunction I/O Board to stop sending electrical pulses.

This mode of operation is employed if a "misfiring" of microdispenser 16 has been detected by control logic 42.

It is also within the scope of the invention for the microvolume liquid handling system 10 to automatically determine (calibrate)the size of the emitted droplets 26 for transfer liquids 24 of varying properties. As heretofore mentioned, emitted droplet 26 size is affected by the properties of the transfer liquid 24. Therefore, it is desirable to be able to automatically determine emitted droplet 26 size so that the user need only specify the total transfer volume, and the system 10 will internally determine the number of emitted droplets 26 required to satisfy the user request. In the encoded autocalibrationalgorithm, once the system 10 is primed, an air gap 22 and transfer liquid 24 aspirated, the control logic 42 instructs microdispenser electronics 51 to send a specific number of electrical pulses, e.g., 1000, to the microdispenser 16. The resulting drop in pressure sensor 14 signal is used by control logic 42 to determine the volume of transfer liquid 24 that was dispensed. This dispensed volume determination is verified by the control logic 42 tracking the volume displaced by the movement of the plunger 34 to restore the system liquid 20 line pressure to the pre-dispense value.

The microvolume liquid handling system 10 illustrated is FIG. 1 depicts a single microdispenser 16, pressure sensor 14, and pump 12. It is within the spirit and scope of this invention to include embodiments of microvolume liquid handling systems that have a multiplicity (e.g., 4, 8, 96) of microdispensers 16, pressure sensors 14, and pumps 12. It is also within the spirit and scope of this invention to include embodiments of microvolume liquid handling systems that have a multiplicity of microdispensers 16, pressure sensors 14, valves 38, and one or more pumps 12.

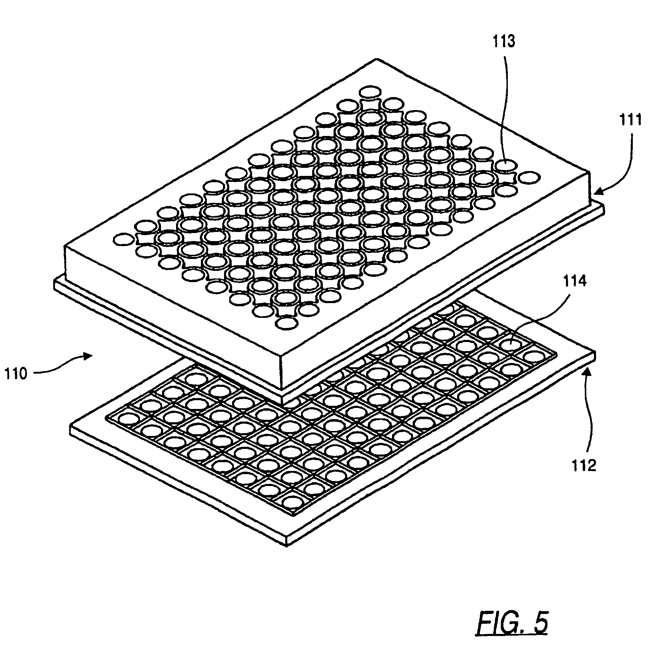

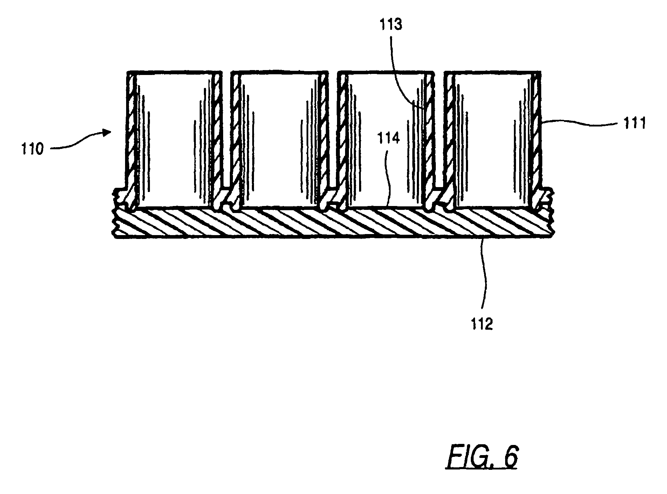

Turning now to FIGS. 5, 6 and 7, one application for drop-on-demand microvolume fluid dispensing is to deposit precise amounts of transfer liquid 24 into an array of wells in a microtitre plate 110, which is described in U.S. Patent No. 5,457,527. The microtitre plate 110 is formed from two molded plastic plates 111 and 112. The upper plate 111 forms the side walls 113 of the multiple wells of the microtitre plate, and in the illustrative example, the wells are arranged in an 8x12 matrix, although matrices with other dimensions also work with the present invention. The bottom plate 112 forms the bottom walls 114 of the matrix web, and is attached to the lower surface of to the lower surface of the upper plate by fusing the two plates together. The upper plate 111 is formed from an opaque polymeric material so that light cannot be transmitted therethrough. In contrast to the upper plate 111, the lower plate 112 is formed of a transparent polymeric material so that it forms a transparent bottom wall 114 for each sample well. This permits viewing of sample material through the bottom wall 114, and also permits light emissions to be measured through the bottom wall. The transparent bottom walls 114 may also be used to expose the sample to light from an external excitation source, while leaving the tops of the wells unobstructed for maximum detection area.

In part because the present microvolume fluid dispensing system 10 can precisely dispense extremely small quantities of fluid, it is possible to utilize microtitre arrays 110 of correspondingly reduced dimensions. The difficulty of positioning the nozzle 63 directly over each well increases as the well diameter approaches the one millimeter range. In the case of a well diameter of one millimeter, it is desirable to position the nozzle 63 within 150 micrometers ("µM") of the center of the well to permit accurate droplet shooting. The present invention utilizes a transparent bottom portion 112 of the microtitre plate array 110, which allows visible and infrared light to pass through the bottom of the microtitre array 110 into the well formed by the opaque side walls 113 of the microtitre plate array 111 and the transparent bottom walls 114 of the transparent bottom array 112. In one embodiment infrared light is passed through the transparent bottom section 112 of the microtitre plate array 110 onto the glass capillary 62 of the microdispenser 16. The light received at the microdispenser 16 is passed through the glass capillary 62 to an appropriate infrared detector (not shown) mounted on the glass capillary 62. The infrared light source, in combination with the narrow well structure, provides a narrow beam of infrared light directed upward through each well, but not through an opaque material between the wells. As the microdispenser is moved from one well to another it encounters a relatively dark zone indicating the dispenser is between wells, followed by a relatively bright zone indicating the edge of the next well is directly below. The positioning robot then uses these cues to reach and verify the position of the microdispenser.

In another preferred embodiment, visible light is used in place of infrared light as described above. For example, any visible wavelength of light can be used if the wells are devoid of liquid, or have clear liquids and a matching detector is used in place of the infrared detector. In the case where a turbid or cloudy liquid is present in the wells, a greenish light at 300 nM can be passed through the microtitre plate 110 to the turbid liquid. A cryptate compound added to the liquid present in the well fluoresces in response to excitation by the greenish light. Cryptate fluoresces at approximately 620 and 650 nM, corresponding to red light. A detector that detects those red wavelengths is used in place of the infrared detector.

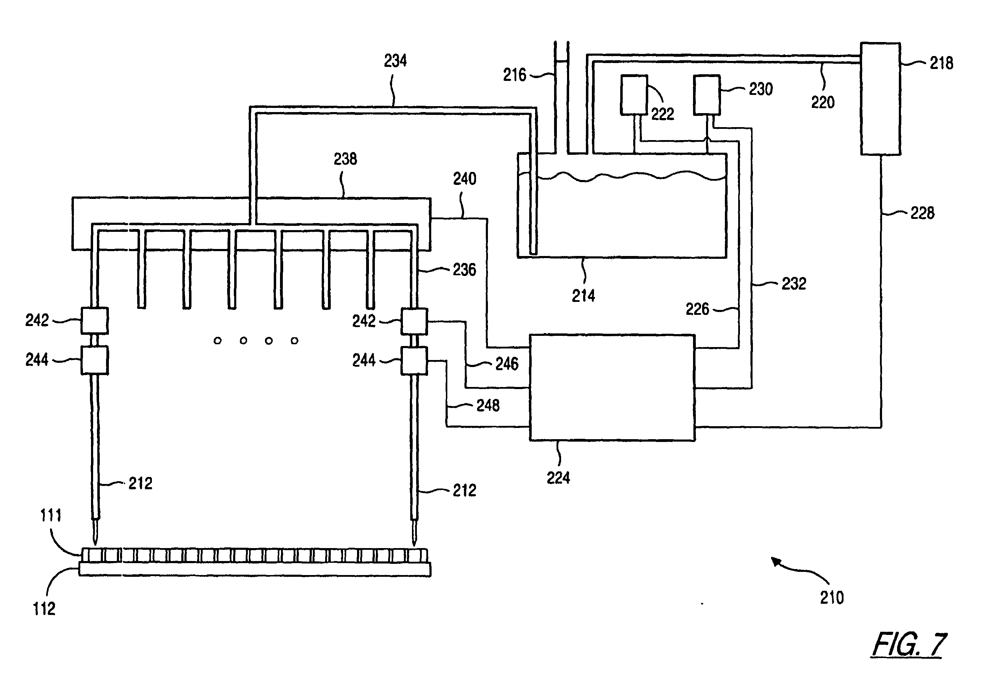

Turning now to FIG. 7, the second preferred embodiment of the microvolume liquid handling system 210 is shown. The second preferred embodiment is more preferred than the first preferred embodiment when the number of microdispensers 212 employed is equal to or greater than eight because the second embodiment becomes more cost effective as the number of microdispensers 212 is increased. When the number of microdispensers 212 employed is equal to or less than four, the first preferred embodiment is more preferred than the second preferred embodiment because the first embodiment becomes more cost effective when small numbers of microdispensers 212 are employed. The tradeoff occurs because in the second preferred embodiment a system liquid reservoir 214 is used to supply system liquid 20 to all the microdispensers 212, thus eliminating the separate pump and pressure sensor for each microdispenser 212 in the first preferred embodiment. However, because the system liquid reservoir 214 is more expensive to implement, it is more cost effective to employ the first embodiment when four or fewer microdispensers are employed. Note that first and second preferred embodiments are otherwise identical in structure and operation except as described herein. The precise number of microdispensers employed is a function of the user's dispensing requirements.

With regard to the second preferred embodiment, the system liquid reservoir 214 receives system liquid 20, typically deionized water, through an intake tube 216 which contains a cap (not separately shown). The cap on the intake tube 216 is removed to enable the sealed system liquid reservoir 214 to receive system liquid 20 when the cap is off and seals the system liquid reservoir 214 shut when the cap is on so that the system liquid reservoir 214 can be maintained at a desired pressure. Pressure in the system liquid reservoir 214 is maintained by a pressure control system 218, through pressure control tubing 220. The pressure control system 218 includes an electrically controlled pump capable of accurately increasing or decreasing pressure in the system liquid reservoir 214. A pressure sensor 222 mounted on the system liquid reservoir 214 senses pressure in the system liquid reservoir 214 and transmits an electrical signal indicative of that pressure to a system controller 224 through electrical conductor 226. The system controller 224 contains a digital signal processor board and other electronics(not shown) which enable monitoring of various electrical signals, execution of control software code, and control of the microvolume liquid handling system 210. The system controller 224 electrically controls the pressure control system 218 through an electrical conductor 228 to adjust the pressure of the system liquid 20, and correspondingly, the pressure of the transfer liquid 24. A pressure relief valve 230 is mounted on the system liquid reservoir 214. The pressure relief valve 230 releases pressure from the system liquid reservoir 214 when the pressure exceeds a predetermined safety threshold. In one embodiment, the pressure relief valve 230 can also be opened by the system controller 224 which is connected to the pressure relief valve 230 by a wire 232.

During operations, the system controller 224 directs the pressure control system 218 to maintain one of three different pressure levels in the system reservoir 214 with regard to ambient atmospheric pressure. Each of the three pressure levels correspond to a different phase of operation of the microvolume liquid handling system 210. The three different pressure levels are a positive pressure, a high negative pressure and a low negative pressure. Prior to dispensing, the positive pressure level is used for cleaning in order to flush the microdispenser free of any foreign matter in combination with resonant ultrasonic excitation of the microdispensers 212 in the manner described above. After the microdispensers 212 are relatively clean, the high negative pressure level, roughly 200 millibars less than the ambient atmospheric pressure, is used to aspirate transfer liquid 24 into the microdispensers 212. Once the transfer liquid 24 has been aspirated into the microdispensers 212, the low negative pressure level, roughly -15 millibars, is used to supply back pressure to the transfer liquid 24 in the microdispensers 212 such that as droplets are dispensed, no additional transfer liquid 24 leaves the microdispensers 212.

System liquid 20 in the system reservoir 214 is coupled to the microdispensers 212 through a distribution tube 234 that splits into a plurality of sections 236 as shown in FIG. 7, one section 236 is connected to each microdispenser 212. Attached to each of the distribution tube sections 236 are microvalves 242 and flow sensors 244. The microvalves 242 are micro-electro-mechanical machines ("MEMS") that have the primary advantage of being sufficiently small so as to fit easily into the microvolume liquid handling system 210. The microvalves 242 are extremely precise valves used to control the movement of system liquid 20 and correspondingly, the amount of transfer liquid 24 that is dispensed. The system controller 224 sends electrical signals through an electrical connection 246 to control the microvalves 242. A flow sensor 244 is attached to each distribution tube section 236 to determine the amount of liquid that is being aspirated into each microdispenser associated with that flow sensor 244. The flow sensor 244 detects flow of system liquid 20 into or out of each microdispenser 212. The flow sensors 244 are each connected to the system controller 224 through an electrical conductor 248. The electrical conductor 248 carries electrical signals from each flow sensor 244 indicating not only the amount of liquid flow, but also the pressure in the distribution tube 234. The flow sensors 244 are also MEMS that have the primary advantage of being sufficiently small so as to fit easily into the microvolume liquid handling system 210, for example the flow sensors 244 described in IEEE Proceedings, MEMS 1995, publication number 0-7803-2503-6, entitled, A Differential Pressure Liquid Flow Sensor For Flow Regulation and Dosing Systems, by M. Boillat et al.

The distribution tube 234, which is physically connected to the microdispensers 212, is attached to a three axis robot 238, as in the first preferred embodiment, which correspondingly relocates the microdispensers 212 to positions above different microtitre plate 110 wells. After the desired number of droplets has been dispensed into each well, the robot 238 moves the microdispensers 212 to the next set of wells for further dispensing. Precise coordination of the robot's 238 movement is accomplished as described above with reference to the use of light passed through the bottom microtitre plate 112.

## Claims

1. A microvolume liquid handling system (10, 210) for dispensing predetermined microvolumes of a transfer liquid (24), comprising:
a pump (12, 218) for pumping a,column of fluid including said transfer liquid (24);
a microdispenser (16, 212) for dispensing said microvolumes of said transfer liquid (24);
tubing (18, 234, 236) for connecting said pump (12, 218) to said microdispenser (16, 212);
a pressure sensor (14, 244) connected to said tubing (18, 220, 234, 236) between said pump (12, 218) and said microdispenser (16, 212) for converting pressure changes in said tubing (18, 220, 234, 236) into a signal; and
means (14, 244, 42, 224) for determining the volume of dispensed transfer liquid (24),
**characterised in that** said microdispenser (16, 212) is adapted to dispense said microvolume of transfer liquid (24) when said column of said fluid terminates at a closed end in said pump (12, 218) thereby causing a pressure drop within said column,
and said means for determining the volume of dispensed transfer liquid (24) comprises said pressure sensor (14, 224) adapted to convert said pressure drop into a signal, and
a control logic (42, 224) adapted to convert the pressure drop signal into an indication of transfer liquid volume dispensed.

2. The system of claim 1 wherein said pumped column of fluids includes said transfer liquid (24) and a system liquid (20) separated by a compressible gas (22), said transfer liquid (24) being arranged at a dispensing port (63) of said microdispenser (16, 212).

3. A system of claim 1 wherein said microdispenser (16, 212) is adapted to produce discrete, substantially reproducibly sized droplets (26) that are less than one nanoliter in volume.

4. A system of claim 2 further comprising a valve (38) for coupling said pressure sensor (14) to a syringe (30) of said pump (12), for pumping said system liquid (20) via said syringe (30) from a reservoir (40) into said pressure sensor (14) and said microdispenser.

5. The system of claim 1 wherein said pressure sensor (14, 244) contains a piezoresistive element capable of converting pressure into an electrical signal.

6. The system of claim 1 wherein said microdispenser (16, 212) further comprises a capillary (62) and a constriction portion comprising a piezoelectric transducer (60) in substantially radial contact with a portion of said capillary (62) for deforming said capillary (62) for emitting droplets (26).

7. The system of claim 1 wherein said microdispenser is mounted on a robotic system (58, 238) capable of moving said microdispenser (16, 212).

8. The system of claim 7 wherein said robotic system (58, 238) is a three-axis system.

9. The system of claim 1, further comprising:
a microtitre plate (110) having an array of wells disposed therein, said wells have a bottom portion (112) transparent to light, said bottom portion forming bottom walls of said wells, and a top portion (111) opaque to light, said top portion having gaps that form side walls of the wells;
a light source for emitting light adjacent to said bottom portion (112) of said microtitre plate (110) such that said light is transmitted through said transparent bottom portion and through said gaps in said top portion of said microtitre plate;
a light sensor for sensing said light passing through said wells of said microtitre plate (110) and producing a corresponding light signal when said light is sensed; and
wherein said control logic (42) is electrically coupled to said light sensor for receiving said light signal, said control logic (42) being electrically coupled to a robot (58, 238), and said control logic (42) directing said robot to position said microdispenser (16, 212) to a desired position above said top portion of said microtitre plate (110) in response to said light signal to dispense one or more droplets into one of said wells.

10. The system of claim 2, further comprising:
a system liquid reservoir (214) containing said system liquid (20), said system liquid reservoir (214) is arranged between said microdispenser (212) and said pump (218) and is coupled to said pump (218); and
wherein said pump (218) is adapted to increase or decrease pressure of said system liquid (20) in said system liquid reservoir (24).

11. The system of claim 1 wherein said microdispenser has a capillary portion (62) for dispensing droplets (26) of said transfer liquid (24) through a dispensing port forming a nozzle (63) and a constricting portion (60) for constricting said capillary portion (62); said constricting portion (60) is adapted to be constricted at a frequency sufficiently high to dislodge contaminating material adhering to said microdispenser.

12. The system of claim 11 wherein said constricting portion (60) further comprises a piezoelectric transducer (60).

13. The microvolume liquid handling system of claim 11 wherein said frequency is approximately an ultrasonic frequency resonant with said microdispenser (16, 212).

14. The microvolume liquid handling system of claim 13 wherein said resonant frequency is approximately 12 kHz.

15. A microvolume liquid handling method for dispensing predetermined microvolumes of a transfer liquid (24), comprising the steps of:
pumping a column of fluid in a tubing (18, 234, 236), said column of fluid including said transfer liquid (24);
dispensing said microvolumes of said transfer liquid (24);
converting pressure changes in said tubing (18, 220, 234, 236) into a signal; and
determining the volume of dispensed transfer liquid (24),
**characterised in that**
for dispensing from an enclosed tubing (18, 234, 236) having a dispensing port (63), precise quantities of said transfer liquid (24) and for determining the precise volume of the transfer liquid (24), the method comprises the following steps:
(a) transferring into the enclosed tubing (18, 234, 236) a system liquid (20);
(b) supplying into the enclosed tubing (18, 234, 236) a compressible fluid (22) adjacent to said system liquid (20);
(c) transferring into the enclosed tubing (18, 234, 236) said transfer liquid (24) on the other side from said system liquid (20) such that the compressible fluid (22) separates said transfer liquid (24) from said system liquid (20) adjacent to said compressible fluid (22), said transfer liquid (24) being adjacent to the dispensing port (63);
(d) dispensing droplets (26) of the transfer liquid (24) through said dispensing port (63);
(e) sensing pressure drop in the enclosed tubing (18, 234, 236) resulting from the droplets (26) being dispensed;
(f) converting the pressure drop sensed in step (e) into volume of transfer liquid (24) dispensed.

16. The method of claim 15 comprising the step of preventing contamination of the microvolume liquid handling system, said microvolume liquid handling system including a microdispenser (16, 212) having a capillary portion (62) for dispensing droplets (26) of said transfer liquid through the dispensing port (63) and a constricting portion (60) for constricting said capillary portion (62), comprising the steps of:
constricting said constricting portion (62) at a high frequency sufficient to dislodge contaminating material adhering to interior surfaces of said capillary portion (62), said contaminating material being dislodged into said transfer liquid (20) in said capillary portion (62).

17. The process of claim 16, further comprising the steps of:
bringing the dispensing port (63) forming a nozzle (63) of said microdispenser (16, 212) and a source of said transfer liquid (24) containing contaminating matter into operational contact;
aspirating said transfer liquid (24) through said nozzle (63) into said capillary portion (62) of said microdispenser (16, 212), and
wherein said constricting step occurs at a frequency approximately resonant with said microdispenser (16, 212).

18. The process of claim 16, further comprising:
a system liquid reservoir (214) containing a system liquid (20) coupled to said pump (218); and
wherein said pump (218) is capable of increasing or decreasing pressure of said system liquid (20) in said system liquid reservoir (214).

## Patentansprüche

1. Handhabungssystem (10, 210) für ein Flüssigkeits-Mikrovolumen zum Ausgeben vorbestimmter Mikrovolumina einer Übertragungsflüssigkeit (24) mit:
einer Pumpe (12, 218) zum Pumpen einer Strömungsmittelsäule, die die Übertragungsflüssigkeit (24) enthält;
einem Mikrodispenser (16, 216) zum Ausgeben der Mikrovolumina der Übertragungsflüssigkeit (24);
einer Leitungsverbindung (18, 234, 236) zum Verbinden der Pumpe (12, 218) mit dem Mikrodispenser (16, 212);
einem Drucksensor (14, 244), der mit der Leitungsverbindung (18, 220, 234, 236) zwischen der Pumpe (12, 218) und dem Mikrodispenser (16, 212) verbunden ist, um Druckänderungen in der Leitungsverbindung (18, 220, 234, 236) in ein Signal umzuwandeln; und
einer Einrichtung (14, 244, 42, 224) zum Bestimmen des Volumens der ausgegebenen Übertragungsflüssigkeit (24), **dadurch gekennzeichnet, dass** der Mikrodispenser (16, 212) so ausgebildet ist, dass er das Mikrovolumen der Übertragungsflüssigkeit (24) ausgibt, wenn die Strömungsmittelsäule an einem geschlossenen Ende in der Pumpe (12, 218) endet, wodurch ein Druckabfall innerhalb der Säule verursacht wird,
und wobei die Einrichtung zum Bestimmen des Volumens der ausgegebenen Übertragungsflüssigkeit (24) den Drucksensor (14, 224), der so ausgebildet ist, dass er den Druckabfall in ein Signal umwandelt, und eine Steuerlogik (42, 224) enthält, die so ausgebildet ist, dass sie das Druckabfallsignal in einer Anzeige des Ausgabevolumens der Übertragungsflüssigkeit umwandelt.

2. System nach Anspruch 1, wobei die gepumpte Strömungsmittelsäule die Übertragungsflüssigkeit (24) und eine Systemflüssigkeit (20) enthält, die durch ein komprimierbares Gas (22) getrennt sind, wobei die Übertragungsflüssigkeit (24) an einer Ausgabeöffnung (63) des Mikrodispensers (16, 212) angeordnet ist.

3. System nach Anspruch 1, wobei der Mikrodispenser (16, 212) so ausgebildet ist, dass er einzelne, im Wesentlichen reproduzierbar bemessene Tropfen (26) produziert, deren Volumen geringer als ein Nanoliter ist.

4. System nach Anspruch 2, ferner enthaltend ein Ventil (38) zum Koppeln des Drucksensors (14) mit einer Spritze (30) der Pumpe (12), zum Pumpen der Systemflüssigkeit (20) über die Spritze (30) aus einem Reservoir (40) in den Drucksensor (14) und den Mikrodispenser.

5. System nach Anspruch 1, wobei der Drucksensor (14, 244) ein Piezowiderstandselement enthält, das fähig ist, Druck in ein elektrisches Signal umzuwandeln.

6. System nach Anspruch 1, wobei der Mikrodispenser (16, 212) ferner eine Kapillare (62) und einen sich verengenden Bereich umfasst, der einen piezoelektrischen Wandler (60) in einem im Wesentlichen radialen Kontakt mit einem Bereich der Kapillare (62) aufweist, um die Kapillare (62) zum Ausgeben von Tropfen (64) zu verformen.

7. System nach Anspruch 1, wobei der Mikrodispenser an einem Robotersystem (58, 238) montiert ist, der fähig ist, den Mikrodispenser (16, 212) zu bewegen.

8. System nach Anspruch 7, wobei das Robotersystem (58, 238) ein Dreiachsen-System ist.

9. System nach Anspruch 1, ferner umfassend:
eine Mikrotitrierplatte (110) mit einer darin angeordneten Reihe von Löchern, wobei die Löcher einen Bodenbereich (112) aufweisen, der für Licht durchlässig ist, wobei der Bodenbereich die Bodenwände der Löcher bildet, und einen oberen Bereich (111), der für Licht undurchsichtig ist, wobei der obere Bereich Spalten aufweist, die Seitenwände der Löcher bilden;
eine Lichtquelle zum Ausgeben von Licht benachbart dem Bodenbereich (112) der Mikrotitrierplatte (110) derart, dass das Licht durch den transparenten Bodenbereich und durch die Spalten im oberen Bereich der Mikrotitrierplatte hindurchtritt;
einem Lichtsensor zum Feststellen des Lichts, das durch die Löcher der Mikrotitrierplatte (110) hindurchtritt, und zum Erzeugen eines entsprechenden Lichtsignals, wenn das Licht festgestellt wird; und
wobei die Steuerelektronik (42) mit dem Lichtsensor elektrisch gekoppelt ist, um das Lichtsignal zu erhalten, wobei die Steuerelektronik (42) elektrisch mit einem Roboter (58, 238) gekoppelt ist, und wobei die Steuerelektronik (42) den Roboter so ausrichtet, dass der Mikrodispenser (16, 212) in einer gewünschten Position oberhalb des oberen Bereichs der Mikrotitrierplatte (110) in Abhängigkeit vom Lichtsignal angeordnet wird, um einen oder mehrere Tropfen in eine der Bohrungen auszugeben.

10. System nach Anspruch 2, ferner umfassend:
ein Systemflüssigkeits-Reservoir (214), das die Systemflüssigkeit (20) enthält, wobei das Systemflüssigkeits-Reservoir (214) zwischen dem Mikrodispenser (212) und der Pumpe (218) angeordnet und mit der Pumpe (218) gekoppelt ist; und
wobei die Pumpe (218) so ausgebildet ist, dass sie den Druck der Systemflüssigkeit (20) im Systemflüssigkeits-Reservoir (24) erhöht oder erniedrigt.

11. System nach Anspruch 1, wobei der Mikrodispenser einen Kapillarbereich (62) zum Ausgeben von Tropfen der Übertragungsflüssigkeit (24) durch eine Ausgabeöffnung, die eine Düse (63) bildet, und einen sich verengenden Bereich (60) zum Verengen des Kapillarbereichs (62) enthält; wobei der sich verengende Bereich (60) so ausgebildet ist, dass er sich mit einer Frequenz verengt, die ausreichend hoch ist, den Mikrodispenser von anhängendem, kontaminierendem Material zu befreien.

12. System nach Anspruch 11, wobei der sich verengende Bereich (60) ferner einen piezoelektrischen Wandler (60) aufweist.

13. Handhabungssystem für Mikrovolumina von Flüssigkeit nach Anspruch 11, wobei die Frequenz etwa eine Ultraschallfrequenz ist, die mit dem Mikrodispenser (16, 212) resonant ist.

14. Handhabungssystem für Mikrovolumina von Flüssigkeit nach Anspruch 13, wobei die resonante Frequenz etwa 12 kHz beträgt.

15. Verfahren zum Handhaben von Mikrovolumina von Flüssigkeit zum Ausgeben vorbestimmter Mikrovolumina einer Übertragungsflüssigkeit (24) mit den folgenden Verfahrensschritten:
Pumpen einer Strömungsmittelsäule in einer Leitungsverbindung (18, 234, 236), wobei die Strömungsmittelsäule die Übertragungsflüssigkeit (24) enthält;
Ausgeben der Mikrovolumina der Übertragungsflüssigkeit (24);
Umwandeln von Druckänderungen in der Leitungsverbindung (18, 220, 234, 236) in ein Signal; und
Bestimmen des Volumens der ausgegebenen Übertragungsflüssigkeit (24), **dadurch gekennzeichnet, dass** das Verfahren zum Ausgeben von präzisen Mengen der Übertragungsflüssigkeit (24) aus einer geschlossenen Leitungsverbindung (18, 234, 236) mit einer Ausgabeöffnung (63) und zum Bestimmen des präzisen Volumens der Übertragungsflüssigkeit (24) die folgenden Verfahrensschritte enthält:
(a) Übertragen einer Systemflüssigkeit (20) in die geschlossene Leitungsverbindung (18, 234, 236);
(b) Zuführen eines komprimierbaren Strömungsmittel (22) in die geschlossene Leitungsverbindung (18, 234, 236) benachbart zur Systemflüssigkeit (20);
(c) Übertragen des Übertragungsströmungsmittels (24) auf der anderen Seite der Systemflüssigkeit (20) in die geschlossene Leitungsverbindung (18, 234, 236), so dass das komprimierbare Strömungsmittel (22) die Übertragungsflüssigkeit (24) von der Systemflüssigkeit (20) benachbart dem komprimierbaren Strömungsmittel (22) trennt, wobei die Übertragungsflüssigkeit (24) sich benachbart der Ausgabeöffnung (63) befindet;
(d) Ausgeben von Tropfen (26) der Übertragungsflüssigkeit (24) durch die Ausgabeöffnung (63);
(e) Feststellen des Druckabfalls in der geschlossenen Leitungsverbindung (18, 234, 236), der von den ausgegebenen Tropfen (26) herrührt;
(f) Umwandeln des Druckabfalls, festgestellt im Verfahrensschritt (e), in ein Volumen der ausgegebenen Übertragungsflüssigkeit (24).

16. Verfahren nach Anspruch 15, umfassend den Verfahrensschritt des Verhindems einer Kontamination des Handhabungssystems für Mikrovolumina von Flüssigkeit, wobei das Handhabungssystem für Mikrovolumina von Flüssigkeit einen Mikrodispenser (16, 212) mit einem Kapillarbereich (62) zum Ausgeben von Tropfen (26) der Übertragungsflüssigkeit durch die Ausgabeöffnung (63) und einen sich verengenden Bereich (60) zum Verengen des Kapillarbereichs (62) enthält, umfassend die folgenden Verfahrensschritte:
Verengen des sich verengenden Bereichs (62) mit einer hohen Frequenz, die ausreicht, die inneren Oberflächen des Kapillarbereichs (62) von anhängendem, kontaminierendem Material zu befreien, wobei das kontaminierende Material in die Übertragungsflüssigkeit (20) im Kapillarbereich (62) abgegeben wird.

17. Verfahren nach Anspruch 16, ferner umfassend die folgenden Verfahrensschritte:
die Ausgabeöffnung (63), die eine Düse (63) bildet, des Mikrodispensers (16, 216) und ein Vorrat der Übertragungsflüssigkeit (24), der kontaminierendes Material enthält, werden in Wirkkontakt gebracht;
die Übertragungsflüssigkeit (24) wird durch die Düse (63) in den Kapillarbereich (62) des Mikrodispensers (16, 212) angesaugt, und
wobei der Verengungsschritt stattfindet unter einer Frequenz, die im Wesentlichen mit dem Mikrodispenser (16, 212) resonant ist.

18. Verfahren nach Anspruch 16, ferner umfassend:
ein Systemflüssigkeits-Reservoir (214), das eine Systemflüssigkeit (20) enthält, gekoppelt mit der Pumpe (218); und
wobei die Pumpe (218) in der Lage ist, den Druck der Systemflüssigkeit (20) im Systemflüssigkeits-Reservoir (214) zu erhöhen oder zu verringern.

## Revendications

1. Système de manipulation de microvolumes de liquide (10, 210) destiné à distribuer des microvolumes déterminés d'un liquide de transfert (24), comprenant :
une pompe (12, 218) destinée à pomper une colonne de fluide comprenant ledit liquide de transfert (24) ;
une micropipette (16, 212) destinée à distribuer lesdits microvolumes dudit liquide de transfert (24) ;
une conduite (18, 234, 236) destinée à connecter ladite pompe (12, 218) à ladite micropipette (16, 212) ;
un capteur de pression (14, 244) connecté à ladite conduite (18, 220, 234, 236) entre ladite pompe (12, 218) et ladite micropipette (16, 212) destiné à convertir en un signal les variations de la pression dans ladite conduite (18, 220, 234, 236) ; et
un moyen (14, 244, 42, 224) pour déterminer le volume du liquide de transfert (24) distribué,
**caractérisé en ce que** ladite micropipette (16, 212) est conçue pour distribuer ledit microvolume de liquide de transfert (24) lorsque ladite colonne dudit fluide s'achève par une extrémité fermée au niveau de ladite pompe (12, 218), ce qui provoque une chute de pression à l'intérieur de ladite colonne,
et **en ce que** ledit moyen pour déterminer le volume de liquide de transfert (24) distribué comprend ledit capteur de pression (14, 224) conçu pour transformer ladite chute de pression en un signal, et un circuit logique de commande (42, 224) conçu pour convertir le signal de chute de pression en une indication du volume de liquide de transfert distribué.

2. Système selon la revendication 1, dans lequel ladite colonne de fluides pompée comprend ledit liquide de transfert (24) et un liquide système (20) séparés par un gaz compressible (22), ledit liquide de transfert (24) étant disposé au niveau d'un orifice de distribution (63) de ladite micropipette (16, 212).

3. Système selon la revendication 1, dans lequel ladite micropipette (16, 212) est conçue pour produire des gouttelettes (26) discrètes, de taille sensiblement reproductible qui sont d'un volume inférieur à un nanolitre.

4. Système selon la revendication 2, comprenant en outre une vanne (38) destinée à coupler ledit capteur de pression (14) à une seringue (30) de ladite pompe (12) afin de pomper ledit liquide système (20) à l'aide de ladite seringue (30) dans un réservoir (40) et vers ledit capteur de pression (14) et ladite micropipette.

5. Système selon la revendication 1, dans lequel ledit capteur de pression (14, 244) comprend un élément piézorésistif capable de transformer une pression en un signal électrique.

6. Système selon la revendication 1, dans lequel ladite micropipette (16, 212) comprend en outre un capillaire (62) et une portion de constriction comprenant un transducteur piézoélectrique (60) en contact sensiblement radial avec une portion dudit capillaire (62) afin de déformer ledit capillaire (62) pour émettre des gouttelettes (26).

7. Système selon la revendication 1, dans lequel ladite micropipette est montée sur un système robotisé (58, 238) capable de déplacer ladite micropipette (16, 212).

8. Système selon la revendication 7, dans lequel ledit système robotisé (58, 238) est un système à trois axes.

9. Système selon la revendication 1, comprenant en outre :
une plaque de microtitrage (110) dans laquelle est ménagé un réseau de puits, lesdits puits possédant une portion inférieure (112) transparente à la lumière, ladite portion inférieure formant des parois inférieures desdits puits, et une portion supérieure (111) opaque à la lumière, ladite portion supérieure présentant des ouvertures qui forment les parois latérales des puits ;
une source lumineuse destinée à émettre de la lumière auprès de ladite portion inférieure (112) de la plaque de microtitrage (110) afin que ladite lumière traverse ladite portion inférieure transparente et lesdites ouvertures dans ladite portion supérieure de ladite plaque de microtitrage ;
un détecteur de lumière destiné à détecter ladite lumière traversant lesdits puits de ladite plaque de microtitrage (110) et à produire un signal lumineux correspondant lorsque ladite lumière est détectée ; et dans lequel ledit circuit logique de commande (42) est couplé électriquement audit capteur de lumière afin de recevoir ledit signal lumineux, ledit circuit logique de commande (42) étant couplé électriquement à un robot (58, 238) et ledit circuit logique de commande (42) commandant audit robot de positionner ladite micropipette (16, 212) dans une position voulue au-dessus de ladite portion supérieure de ladite plaque de microtitrage (110) en réponse audit signal lumineux afin de distribuer une ou plusieurs gouttelettes dans l'un desdits puits.

10. Système selon la revendication 2, comprenant en outre :
un réservoir de liquide système (214) contenant ledit liquide système (20), ledit réservoir de liquide système (214) étant disposé entre ladite micropipette (212) et ladite pompe (218) et étant couplé à ladite pompe (218), et
dans lequel ladite pompe (218) est conçue pour augmenter ou réduire le pression dudit liquide système (20) dans ledit réservoir de liquide système (214).

11. Système selon la revendication 1, dans lequel ladite micropipette possède une portion capillaire (62) afin de distribuer des gouttelettes (26) dudit liquide de transfert (24) par une ouverture de distribution formant une buse (63) et une portion de constriction (60) afin de comprimer ladite portion capillaire (62) ; ladite portion de constriction (60) étant conçue pour être comprimée à une fréquence suffisamment élevée pour évacuer les matériaux contaminants qui adhèrent à ladite micropipette.

12. Système selon la revendication 11, dans lequel ladite portion de constriction (60) comprend également un transducteur piézoélectrique (60).

13. Système de manipulation de microvolumes de liquide selon la revendication 11, dans lequel ladite fréquence est approximativement une fréquence ultrasonore résonant avec ladite micropipette (16, 212).

14. Système de manipulation de microvolumes de liquide selon la revendication 13, dans lequel ladite fréquence résonante est approximativement de 12 kHz.

15. Procédé de manipulation de microvolumes de liquide pour distribuer des microvolumes prédéterminés d'un liquide de transfert (24), comprenant les étapes consistant à :
pomper une colonne de fluide dans une conduite (18, 234, 236), ladite colonne de fluide comprenant ledit liquide de transfert (24) ;
distribuer lesdites microvolumes dudit liquide de transfert (24) ;
convertir les variations de pression dans ladite conduite (18, 220, 234, 236) en un signal ; et
déterminer le volume de liquide de transfert (24) distribué,
**caractérisé en ce que**, pour distribuer des quantités précises dudit liquide de transfert (24) à partir d'une conduite cartérisée (18, 234, 236) possédant un orifice de distribution (63) et pour déterminer le volume précis du liquide de transfert (24), le procédé comprend les étapes suivantes consistant à :
(a) transférer dans la conduite cartérisée (18, 234, 236) un liquide système (20) ;
(b) fournir dans la conduite cartérisée (18, 234, 236) un fluide compressible (22) adjacent audit liquide système (20) ;
(c) transférer dans la conduite cartérisée (18, 234, 236) ledit liquide de transfert (24) de l'autre côté dudit liquide système (20), de sorte que le fluide compressible (22) sépare ledit liquide de transfert (24) dudit liquide système (20) adjacent audit fluide compressible (22), ledit liquide de transfert (24) étant adjacent à l'orifice de distribution (63) ;
(d) distribuer des gouttelettes (26) du liquide de transfert (24) par ledit orifice de distribution (63) ;
(e) détecter, dans la conduite cartérisée (18, 234, 236) , la chute de pression résultant de la distribution des gouttelettes (26) ;
(f) convertir la chute de pression détectée à l'étape (e) en un volume de liquide de transfert (24) distribué.

16. Procédé selon la revendication 15, comprenant les étapes consistant à prévenir la contamination du système de manipulation de microvolumes de liquide, ledit système de manipulation de microvolumes de liquide possédant une micropipette (16, 212) ayant une portion capillaire (62) pour distribuer des gouttelettes (26) dudit liquide de transfert par l'orifice de distribution (63) et une portion de constriction (60) afin de comprimer ladite portion capillaire (62), comprenant les étapes consistant à :
comprimer ladite portion de constriction (62) à une fréquence suffisamment élevée pour éliminer les matériaux contaminants adhérant aux surfaces intérieures de ladite portion capillaire (62), lesdits matériaux contaminants étant évacués dans ledit liquide de transfert (20) dans ladite portion capillaire (62).

17. Procédé selon la revendication 16, comprenant en outre les étapes consistant à :
amener en contact opérationnel l'orifice de distribution (63) formant une buse (63) de ladite micropipette (16, 212) et une source dudit liquide de transfert (24) contenant des produits contaminants ;
aspirer ledit liquide de transfert (24) par ladite buse (63) dans ladite portion capillaire (62) de ladite micropipette (16, 212), et
dans lequel ladite étape de constriction se produit à une fréquence résonant approximativement avec ladite micropipette (16, 212).

18. Procédé selon la revendication 16, comprenant en outre :
un réservoir de liquide système (214) contenant un liquide système (20) et couplé à ladite pompe (218) ; et
dans lequel ladite pompe (218) est en mesure d'augmenter ou de réduire la pression dudit liquide système (20) dans ledit réservoir de liquide système (214).
